# EUROPEAN PATENT APPLICATION

(11) **EP 3 026 367 A2**
(43) Date of publication of application: **01.06.2016**
(21) Application number: 15193332.2
(22) Date of filing: 06.11.2015
(51) Int. Cl.: F24J 3/08

(54) **HOLLOW GEOTHERMAL PROBE BODY AND GEOTHERMAL PROBE**

(30) Priority: 20.11.2014 IT BO20140111 U
(71) Applicant: Geointech S.r.l., 61028 Sassocorvaro (Pesaro Urbino) (IT); ITUBE S.r.l., 61025 Montelabbate (Pesaro Urbino) (IT)
(72) Inventor: DEL MORO, Stefano, 61040 BARCHI (PESARO URBINO) (IT)
(74) Representative: Firmati, Leonardo

(57) **Abstract**

Described is a hollow, geothermal probe body (2), designed to adopt a substantially rectilinear shape extending along a first defined axis (X) inside a vertical pit to exchange heat with the ground through a heat transfer fluid circulating inside it.

## Description

This invention relates to a hollow body for a geothermal probe and to the related geothermal probe.

More specifically, this invention has for its object a hollow probe body for use in geothermal heat pump systems.

Geothermal heat pump systems are used for summer cooling and winter heating in air-conditioning systems of buildings, for producing domestic hot water and for heating/cooling in industrial processes as, for example, in industrial food processing.

These systems basically comprise a heat pump and an exchanger, called probe, capable of heat exchange with the ground.

In practice, these systems use the ground under the earth's surface as a heat reservoir: during the winter, heat is transferred to the surface, whereas in summer, excess heat, for example from buildings, is transferred to the ground.

This technology is based on the fact that the temperature under the earth's surface is constant throughout the year, independently of seasonal climatic fluctuations. In effect, at a depth of even just a few metres, the average temperature of the ground is around 14°C.

The instruments which allow such heat exchange to take place are known as heat pumps. In winter, a heat pump takes advantage of the heat difference between the ground and the outside to absorb heat from the ground and make it available for heating, whereas in summer, reversing the process, it absorbs heat from the surface and dissipates it to the ground.

In recent years, the market of geothermal heat pump systems has grown at an extraordinary rate in many European countries, where these systems, especially those with vertical probes, are also becoming more commonplace in private homes.

In economic terms, the installation of domestic systems, meaning by this systems intended for individual housing units or small buildings, is largely influenced by the cost factor involved in boring the holes in the ground to accommodate the vertical probes.

This factor has posed the problem of limiting the number and depth of the holes to be bored through constant improvement of the heat exchange efficiency of the probes.

Today, the universally accepted practice is to bore a cylindrical hole in the ground and place in the hole two pipes connected to each at the bottom to form a U shape. The heat transfer fluid (for example, a glycol-based mixture, flows inside the pipes to exchange heat with the heat pump circuit.

The empty space between the walls of the hole and those of the pipes inserted therein, is normally filled with cement-based mortar mixed with additive components for improving thermal conductivity.

Geothermal probes currently used, however, although acceptable in operation, leave room for improvements to enhance the overall efficiency of the system.

The aim of this invention is therefore to provide a geothermal probe capable of improving the efficiency of the geothermal heat pump system in which it is installed.

A further aim of the invention is to provide a geothermal probe which is at once easy and inexpensive to make and practical and efficient to use. The technical features of the invention with reference to the above mentioned aims may be easily inferred from the contents of the appended claims.

Further, the advantages of the invention are more apparent from the detailed description which follows, with reference to the accompanying drawings which illustrate preferred non-limiting embodiments of the invention purely by way of example and in which:
- Figure 1 shows a preferred embodiment of a component of a geothermal probe according to this invention in a schematic perspective view from above;
- Figure 2 shows a detail of the component of Figure 1 in a respective schematic perspective view from above;
- Figures 3 to 5 show variant embodiments of the component of Figures 1 and 2 in respective schematic perspective views from above;

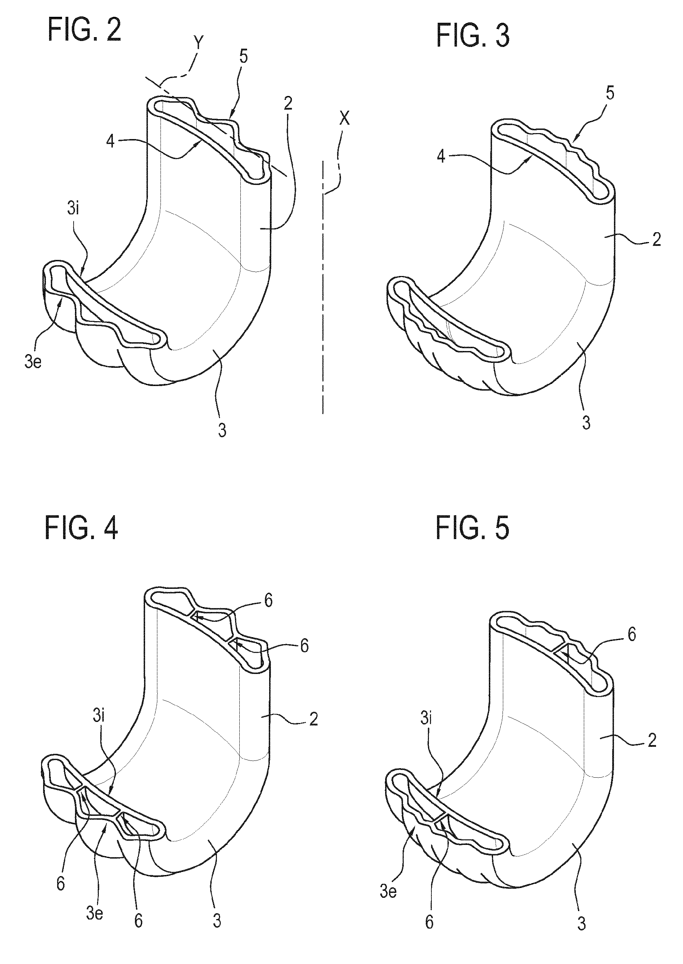

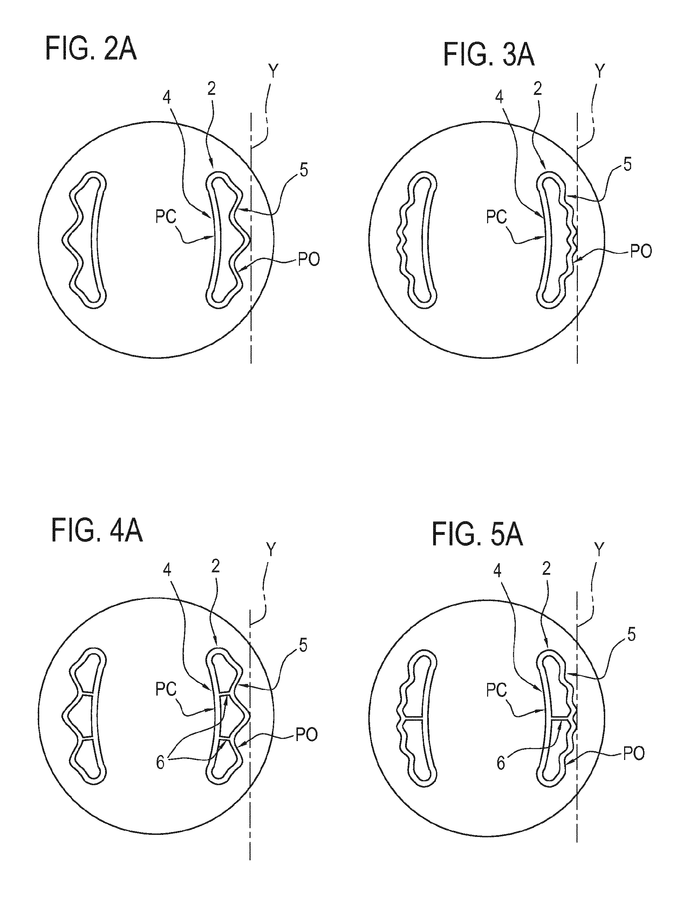

- Figures 2A to 5A are respective cross sectional views showing geothermal probes which use the components of Figures 2 to 5, respectively;

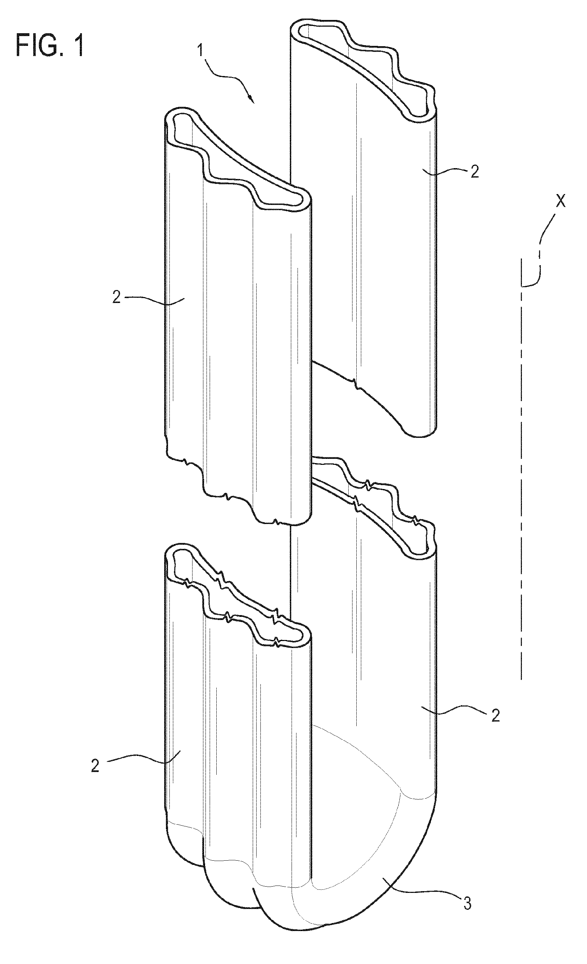

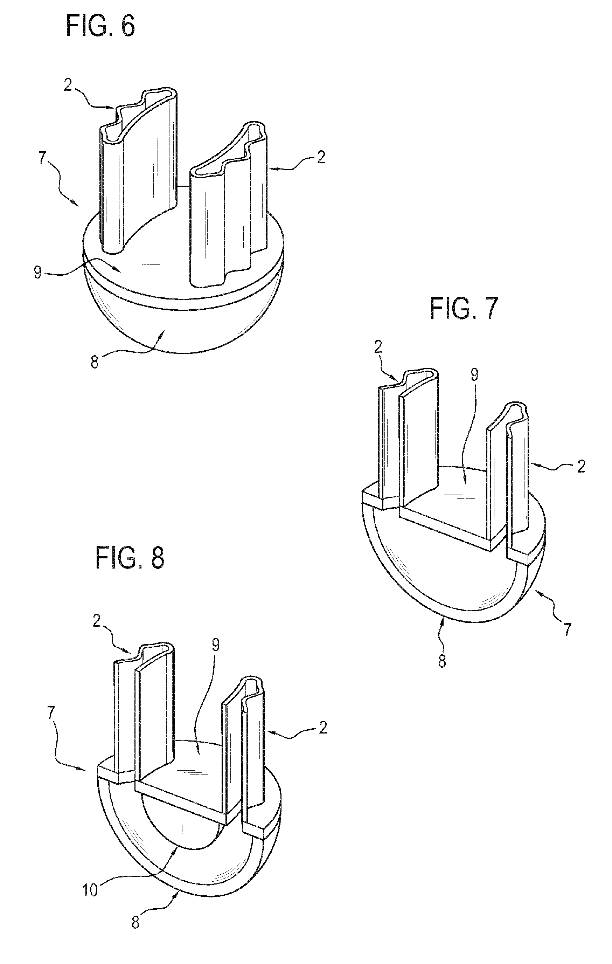

- Figures 6 to 8 are respective perspective views, some of which partly in cross section, showing variant embodiments of the component of Figure 1. As illustrated in the drawings, the reference numeral 1 denotes in its entirety a U-shaped pipe designed to be placed in a cylindrical hole bored in the ground.

The U-shaped pipe 1 is made by joining two substantially rectilinear pipes 2, which constitute its branches, hereinafter referred to as hollow bodies. The pipe 1, together with a casting of cementitious mortar for example, contributes to forming a geothermal probe to be connected to a respective heat pump, not illustrated, in a geothermal heat pump system.

As illustrated in Figure 1, the two hollow bodies 2 adopt a substantially rectilinear shape extending along a first defined axis X inside a cylindrical hole, or vertical pit, bored in the ground, to exchange heat with the ground through a heat transfer fluid flowing inside them.

The two hollow bodies 2 are placed in fluid connection at respective lower ends 2a by means of a curved end connecting element 3. Advantageously, the curved end connecting element 3 has an inside wall 3i and an outside wall 3e whose respective profiles match those of the walls 4 and 5 of the hollow body.

The curved end connecting element 3 is a pipe portion bent by 180° and constitutes a point of flow reversal for the heat transfer fluid flowing inside the hollow bodies 2.

In other words, the heat transfer fluid from the heat pump flows down vertically along one of the two hollow bodies 2 (also identifiable as delivery branch) and on reaching the curved end connecting element 3 located near the bottom of the hole, starts flowing up along the other of the two hollow bodies 2 (also identifiable as return branch).

As illustrated in Figure 2, the hollow body 2 has a first, curved wall 4 whose concavity faces towards the outside of the hollow body 2 itself and a second, corrugated wall 5.

The second wall 5 has corrugations extending along a second axis Y at right angles to the first defined axis X.

Figures 3 to 5 illustrate variant embodiments of the hollow body 2 differing in cross-sectional shape from each other and from the preferred embodiment of Figure 2.

Figures 2a to 5a illustrate each different cross-sectional shape of the hollow body 2 in the form of an outline in a plane perpendicular to the first defined axis X of rectilinear extension of the hollow body 2.

In all the embodiments illustrated, the respective outlines comprise a corrugated profile PO defined by adjacent curved stretches having alternating concavities, the corrugated profile PO corresponding to the aforementioned second, corrugated wall 5.

In other words, the corrugated profile PO constitutes the outline of the second, corrugated wall 5 in the aforementioned plane.

Again with reference to Figures 2a to 5a, in all the embodiments illustrated, the respective outlines comprise a curved profile PC corresponding to the aforementioned first, curved wall 4.

The corrugated profile PO and the curved profile PC face each other and are joined to form the aforementioned outline of the hollow body 2.

Overall dimensions being equal, the corrugated wall 5 allows increasing the size of the heat exchange surface of the hollow body 2, thus improving the efficiency of the geothermal heat pump system in which the hollow body 2 is installed.

With reference to Figures 2 to 5 and from 2a to 5a, the hollow body 2 has an internal space V delimited by the above mentioned walls 4 and 5. In use, the space V is full of heat transfer fluid.

In the embodiment illustrated in Figures 5 and 5a, the hollow body 2 comprises a divider 6 designed to subdivide the internal space V into two separate chambers.

The divider 6 connects the first and the second wall 4 and 5 and extends longitudinally along the first defined axis X.

In the embodiment illustrated in Figures 4 and 4a, the hollow body 2 comprises two dividers 6 designed to subdivide the internal space V into three separate chambers.

In this case, too, the dividers 6 connect the first and the second wall 4 and 5 and extend longitudinally along the first defined axis X. Advantageously, the dividers 6 allow preventing, or at least limiting, the flattening of the walls 4, 5, which would reduce the size of the internal space V of the hollow body 2.

In effect, since the pits are several dozens of metres deep, the hollow bodies 2, before being installed, are stored in large rolls.

When unrolled so it can be installed in a pit, the hollow body 2 might turn out to be flattened and its subsequent embedding in cementitious mortar would cause it to set in this condition, creating constrictions, which would have decidedly negative effects on the circulation of the heat transfer fluid. The hollow body 2 is made of plastic material.

As illustrated in Figures 6 to 8, which illustrate a variant embodiment of the pipe 1, the U-shaped pipe 1 is made by joining the two substantially rectilinear hollow bodies 2 by means of an end head 7.

The end head 7, which is alternative to the end connecting element 3 described above, has a hemispherical shape.

As illustrated in Figure 7, which shows a perspective cross section of it, the head 7 comprises a hemispherical wall 8 and a substantially flat cover 9.

The ends of the two hollow bodies 2 are inserted in matchingly shaped sockets made in the cover 9.

Figure 8 shows a curved flow transfer element 10, applied to the inside face of the cover 9, for the heat transfer fluid flowing inside the head 7.

In other words, the curved flow transfer element 10 constitutes, inside the head 7 and in combination with the hemispherical wall 8, a point of flow reversal for the heat transfer fluid flowing inside the hollow bodies 2.

The end head 7 is made of plastic material.

Advantageously, the plastic material which both the hollow body 2 and the end head 7 are made of is admixed with mineral charges in order to improve thermal conductivity and/or mechanical strength and/or elasticity.

## Claims

1. A hollow, geothermal probe body, designed to adopt a substantially rectilinear shape extending along a first defined axis (X) inside a vertical pit to exchange heat with the ground through a heat transfer fluid circulating inside it, **characterized in that** it comprises a first, curved wall (4) whose concavity faces towards the outside and a second, corrugated wall (5) whose corrugations extend along a second axis (Y) at right angles to the first defined axis (X).

2. The hollow body according to claim 1, **characterized in that** its outline in a plane perpendicular to the first defined axis (X) of rectilinear extension comprises a corrugated profile (PO) defined by adjacent stretches having alternating concavities, the corrugated profile (PO) corresponding to the aforementioned second, corrugated wall (5).

3. The hollow body according to claim 2, **characterized in that** the outline in a plane perpendicular to the first defined axis (X) of rectilinear extension comprises a curved profile (PC) corresponding to the first, curved wall (4), the corrugated profile (PO) and the curved profile (PC) facing each other and being joined to form the outline of the hollow body.

4. The hollow body according to any one of claims 1 to 3, having an internal space (V), **characterized in that** it comprises at least one divider 6 designed to subdivide the internal space (V) into two separate chambers, the divider (6) connecting the first wall (4) and the second wall (5) and extending longitudinally along the first defined axis (X).

5. The hollow body according to any one of claims 1 to 4, made of plastic material, **characterized in that** the plastic material is admixed with mineral charges in order to improve thermal conductivity and/or mechanical strength and/or elasticity.

6. A geothermal probe comprising two parallel branches defined by a hollow body (2) according to any one of claims 1 to 5, **characterized in that** it comprises an end connecting element (3) designed to connect the two parallel branches of the hollow body (2) to form a U shape together with the parallel branches.

7. The geothermal probe according to claim 6, **characterized in that** the end connecting element (3) has an inside wall (3i) and an outside wall (3e) having respective profiles which respectively match those of the curved wall (4) and of the corrugated wall (5) of the hollow body (2).

8. A geothermal probe comprising two parallel branches defined by a hollow body (2) according to any one of claims 1 to 5, **characterized in that** it comprises at least an end head (7) designed to connect the two parallel branches of the hollow body (2) to form a U shape together with the parallel branches.

9. A geothermal heat pump system **characterized in that** it comprises a geothermal probe according to claim 6 or 7.
